# EUROPÄISCHE PATENTSCHRIFT

(11) **EP 1 008 525 B1**
(45) Veröffentlichungstag und Bekanntmachung des Hinweises auf die Patenterteilung: **11.06.2003**
(21) Anmeldenummer: 99120874.5
(22) Anmeldetag: 27.10.1999
(51) Int. Cl.: B65B 51/30

(54) **Einrichtung zum Bearbeiten von kontinuierlich durchlaufendem Material**
Device for treating continuously moving material
Dispositif de traitement de matériau à mouvement continu

(30) Priorität: 11.12.1998 DE 29822122 U
(43) Veröffentlichungstag der Anmeldung: 14.06.2000
(73) Patentinhaber: Vision Verpackungstechnik GmbH, 35305 Grunberg (DE)
(72) Erfinder: Helwig, Christian, 35625 Hüttenberg Rechtenbach (DE); Matheyka, Thomas, 65817 Eppstein (DE)
(74) Vertreter: Meier, Friedrich, Dipl.-Ing.

(56) Entgegenhaltungen:
- EP-A- 0 469 819
- FR-A- 2 446 172
- GB-A- 2 271 753

## Beschreibung

Die Erfindung bezieht sich auf eine Einrichtung zum Bearbeiten von kontinuierlich durchlaufendem Material mit diskontinuierlich auf das Material wirkenden Werkzeugen. Derartige Einrichtungen werden z.B. bei der Herstellung von gefüllten Schlauchbeuteln aus zu einem Schlauch verschweissten oder verklebten Folien eingesetzt. Entsprechend der Beutellänge, werden quer zur Durchlaufrichtung Werkzeuge eingesetzt, die durch Wärmeeinwirkung und Druck, den Folienschlauch in Abständen flach verkleben oder verschweissen und damit den Boden und den Kopf der Beutel erzeugen.

Damit bei der Herstellung von Schlauchbeuteln die Wärme und der Druck eine ausreichende Zeit auf die Folie einwirken kann, muss in jedem Arbeitszyklus das Werkzeug für die notwendige Einwirkdauer, mit der Folie synchron bewegt und nach jedem Schweiss- oder Klebeprozess um die Länge eines Beutels auf die durchlaufende Folie zurückgesetzt werden.

Dieses Zurücksetzen kann in bekannter Weise durch die Verwendung einer nach Art eines Schaufelrades ausgebildeten Einrichtung erfolgen bei der an den Schaufeln die Werkzeuge stimseitig angeordnet sind. Das Schaufelrad wird derart gedreht, dass die Umlaufgeschwindigkeit der Werkzeuge, der Durchlaufgeschwindigkeit der Folie entspricht.

Eine weitere bekannte Möglichkeit, die Werkzeuge nach dem Schweissvorgang um die Beutellänge zurückzusetzen, besteht in einer Vorrichtung, durch die das Werkzeug über eine Konturführung oder durch Gelenkführungen von der Folie abgehoben und geradlinig oder kreisbahnförmig auf die Lage der folgenden Schweissnaht zurückgesetzt und von dieser Stelle aus dann synchron mit der Folie, entsprechend der Schweiss- oder Versiegelungsdauer, bewegt wird.

In ähnlicher Weise können auch andere Materialien im Durchlaufbetrieb von diskontinuierlich eingesetzten Werkzeugen bearbeitet werden.

Während beim Einsatz eines Schaufelrades die Durchsatzgeschwindigkeit durch die notwendige Anlegedauer der Werkzeuge stark begrenzt ist, bzw. der Durchlauf der Folie gebremst oder gestoppt werden muss, kostet das Rücksetzen des Werkzeuges auf die Ausgangsposition Zeit, die länger ist, als z. B. für das portionierte Füllen eines Beutels benötigt wird. Will man die Durchsatzgeschwindigkeit der Folie erhöhen, so müsste bei der Verarbeitung von gleichem Material, die Wegstrecke für den Bearbeitungsvorgang entsprechend der notwendigen Einwirkdauer des Werkzeuges, verlängert werden.

Aus der FR 2 446 172 ist eine Einrichtung bekannt, bei der an Stelle eines Schaufelrades zwei beiderseits der zu verarbeitenden Folie angeordnete Paare von Bearbeitungswerkzeugen über Zahnradgetriebe und Kurbelscheiben von einem Motor bewegt werden. Mit den Kurbelscheiben sind über Kurbelzapfen Hebelgestänge verbunden, die nach Art eines Pleuels bewegt werden. Über dieses Hebelgestänge werden die fliegend, das heisst einseitig gelagerten Werkzeugpaare abwechselnd gegen die Folie bewegt. Durch die Bewegung der Kurbelzapfen auf den Kurbelscheiben, ergibt sich bei jeder Umdrehung der Kurbelscheibe eine Bewegungsumkehr die über das Gestänge nicht nur das Schliessen und Öffnen der Werkzeuge, sondern auch deren Hub- und Senkbewegung bewirkt. Daraus resultiert eine ungleichmässige Bewegungsgeschwindigkeit der Werkzeuge gegenüber der durchlaufenden Folie. Aus diesem Grunde lässt diese Konstruktion auch keine kontinuierliche Bearbeitung der Folie zu. Nach dem Stande der Technik wird dieser an sich unerwünschte Effekt genutzt, die beiden Werkzeuge gleichzeitig so zur Wirkung zu bringen, dass durch Stauchen eines Schlauchstückes quaderförmige Packungen entstehen.

Sieht man von den mit den beschriebenen Hebelgestängen verbundenen Problemen einer relativ geringen Presskraft, den aufwendigen Lagern für die Gestänge und die Halterung der Werkzeuge ab, so ergeben sich trotz der Verdoppelung der Werkzeugpaare gegenüber bekannten Abpackeinrichtungen mit einem Werkzeug, kaum Verbesserungen bezüglich der Durchsatzmenge, weil die starre Kopplung von gleichmässig drehenden Antrieben mit den bewegten Werkzeugen, keine schnelle Rückstellung der Werkzeuge auf die nächste Arbeitsposition erlaubt.

Der Erfindung liegt die Aufgabe zugrunde, eine Einrichtung für die Bearbeitung eines kontinuierlich durchlaufenden Materials zu schaffen, mit der der Durchsatz des zu verpackenden Materials bei gleichem Zeitaufwand für die Synchronbewegung der Folie mit den aktiven Werkzeugen wesentlich erhöht und die Bearbeitungsstellen mit unterschiedlichen Abständen gesetzt oder unterschiedliche Bearbeitungen in einem Durchlauf durchgeführt werden können.

Gemäss der Erfindung wird diese Aufgabe mit einer Einrichtung gelöst, die von zwei beiderseits der Folie angeordneten Werkzeugpaaren Gebrauch macht und nach den Konstruktionsmerkmalen des Anspruches 1 aufgebaut ist. Die Werkzeuge sind bei dieser Konstruktion nur einseitig gelagert, so dass zwei beiderseits der zu verarbeitenden Folie angeordnete Werkzeugpaare ohne Wickeleffekt räumlich ineinander greifen können.

Vorteilhaft wird die getrennte Steuerung der Antriebswellen durch unabhängig voneinander steuerbare Antriebe erreicht, die nicht nur die Anpassung der Durchlaufgeschwindigkeiten, sondern auch eine höhere Geschwindigkeit bei der Rücksetzbewegung der Werkzeuge ermöglicht. Durch die Vermeidung eines Hebelgestänges können die Werkzeugträger sehr stabil ausgeführt und damit die Anpresskräfte hoch gehalten werden, was in vielen Fällen die Bearbeitungszeit vermindert.

Beim Einsatz zweier alternierend auf das Material wirkenden Werkzeuge, ist es vorteilhaft, die Lager der beiden Werkzeuge bzw. Werkzeugpaare koaxial, d. h. gleichachsig anzuordnen. Hierfür kann eine der Wellen auch als Hohlwelle ausgebildet sein, so dass sie von einer zweiten, gleichachsigen Antriebswelle durchsetzt werden kann.

Die durch die fliegende Lagerung erreichte Verbesserung der Zugängigkeit zum Bearbeitungsbereich, erlaubt den Einsatz von Werkzeugen derart, dass erfindungsgemäss zwei Werkzeugträgerpaare beiderseits des zu bearbeitenden Materials und mit unabhängig voneinander wirkenden Antrieben angeordnet werden können.

Sind die Werkzeugträger gleich bestückt, so kann bei gleicher Drehzahl der Antriebe nahezu eine Verdoppelung des Durchsatzes erreicht werden. Sind die Werkzeugträger ungleich bestückt, so werden im gleichen Bearbeitungsbereich, zwei Arbeitsgänge in einem Durchgang ausgeführt. Hierzu gehören Arbeitsgänge, wie Abstreifen, Schneiden und Perforieren.

In vielen Anwendungsfällen sind die Antriebssysteme so ausgebildet, dass sich die Werkzeuge auf gleichen Kreisbahnen, mit gleicher Taktzahl bewegen. Mit der Erfindung sind jedoch auch die Voraussetzungen geschaffen, ungleichartige Antriebssysteme zu wählen, durch die die Werkzeugträger auch mit unterschiedlichen Radien oder Geschwindigkeiten gedreht werden können. Damit können Schweissstellen in unterschiedlichen Abständen gesetzt, oder unterschiedliche Bearbeitungen in einem Durchlauf vorgenommen werden.

Die Antriebe für die Werkzeugträger können unabhängig von einander gesteuert werden. Insbes. können die Bewegungsgeschwindigkeiten im Bereich der Bearbeitung von denen des Rücksetz - Umlaufes verschieden sein. Nach dem Lösen des Werkzeuges vom bearbeiteten Material, kann die Bewegungsgeschwindigkeit für die Rücksetzbewegung auf die nächste Verbindungsstelle stark erhöht und damit die Rückstellzeit wesentlich verringert werden.

Mit Hilfe von Servomotoren kann nicht nur der Bewegungsablauf überwacht und angepasst werden, es kann auch sichergestellt werden, dass unerwünschte Berührungskontakte der Werkzeuge im Betrieb vermieden werden.

Da bei einer Kurbelbewegung der Hebel, die Werkzeugpaare theoretisch nur linienförmig aufeinander treffen, sind die Werkzeuge auf den Trägern federelastisch gelagert, so dass die Kreisbewegung des Werkzeuges durch den Antrieb eine für die Dauer der Bearbeitung notwendige Abflachung erfährt.

Würde der Werkzeugträger auf der Kurbel starr gelagert, also mit deren Hebelarm verschwenkt, so ergäben sich nicht nur auf der Bearbeitungsstrecke unzureichende, weil linienförmige Auflagen, sondern auch Probleme mit der Zufuhr von Luft, Heizenergie und dgl. zu den Werkzeugen. Die notwendigen Verbindungen müssten wegen der Wickelbewegung über Drehkupplungen hergestellt werden.

Mit einer Lagerung des Werkzeughalters über ein Rückdrehelement kann erreicht werden, dass das Werkzeug immer in der gleichen Raumlage zum Material liegt. Dies kann durch eine drehbare Lagerung des Werkzeughalters an der Kurbel erfolgen. Hierbei ist der Werkzeughalter in an sich bekannter Weise, über ein Band, insbes. einem Zahnriemen oder auch über Zahnräder mit einer starren, der Achse der Kurbelwelle zugeordneten Welle verbunden. Dreht die Kurbel um die starre Welle, so wird eine Rückdrehbewegung ausgelöst, die den Werkzeughalter immer in gleicher paralleler Raumlage hält.

Zur Erzeugung von Beutelformen mit schräg zur Durchsatzrichtung angeordneten Schweissnähten ist aus der GB 2 271 753 bekannt, den sogenannten Backenstock mit deren Siegelwerkzeuge und Antriebe, in einem Rahmen zu lagern, der nicht nur mit der Folie in Durchlaufrichtung bewegt und gegen diese Durchlaufrichtung zurückgesetzt wird, sondern auch in einem Schwenkrahmen gelagert ist, der ein Verschwenken der Siegelbacken gegenüber einem vom 90° Winkel zur Durchlaufrichtung abweichenden Winkel ermöglicht.

Diese Konstruktion ist nicht nur aufwendig, vielmehr ist sie allein schon bedingt durch die bewegte Masse, vergleichsweise langsam im Betrieb.

Die Konstruktion der erfindungsgemässen Art erlaubt es, die Werkzeuge gegenüber den Werkzeugträgern derart schräg anzuordnen, dass sich Schweiss- oder Klebenähte ergeben, die gegenüber dem zu bearbeitenden Material, z. B. einer durchlaufenden Schlauchfolie, unter einem von 90° abweichenden Winkel verlaufen, ohne den hohen Durchsatz durch Zusatzmassen zu beeinträchtigen.

An Hand der Zeichnungen werden Ausführungsbeispiele beschrieben und die Wirkungsweise der Erfindung erläutert.

Die Fig. 1 zeigt in schematischer Darstellung im Grundriss die wesentlichen Elemente einer Einrichtung nach der Erfindung zur Bearbeitung eines durchlaufenden Folienschlauches FS für die Fertigung von gefüllten Schlauchbeuteln im Augenblick der Öffnung des Werkzeugpaares nach einem Schweissvorgang.

Die Fig. 2 zeigt im Aufriss die gleichen Elemente, wobei der Übersicht halber, der Folienschlauch weggelassen ist.

Die Fig. 3 zeigt in Detailansicht die Führung des Werkzeugträgers samt Werkzeug während eines Arbeitszyklus.

Die Fig. 4 zeigt in schematischer Darstellung den Funktionsablauf eines Werkzeug - Trägerpaares während eines Arbeitszyklus.

Gleiche Teile sind mit gleichen Bezugszeichen versehen.

Das zusammenwirkende Paar der Werkzeugträger 1a und 1b ist einseitig - fliegend - über kurbelartige Hebel 2 mit den synchron, aber gegenläufig angetriebenen Wellen 3 und 4 verbunden. Während die Hebel 2 mit den Antriebswellen 3 und 13 bzw. 4 und 14, nach Art einer Kurbel winkelsteif verbunden sind, sind die Werkzeugträger 1a und 1b in den Köpfen 5a und 5b der Hebel 2 schwenkbar gelagert. Die Länge der Hebel 2 bestimmt den Durchmesser der Kreisbahn, auf der die Werkzeugträger 1a und 1 b und damit die Werkzeuge 6a und 6b um die in den Hebelköpfen 5a und 5b drehbar gelagerten Achsen 8a und 8b bewegt werden. Die Länge der Hebel 2 bestimmt zusammen mit der Drehzahl der Wellen 3,4 die Dauer eines Arbeitszyklus und damit auch die Dauer der Schliessung der Werkzeuge 6a, 6b zum Verschweissen der Schlauchfolie FS.

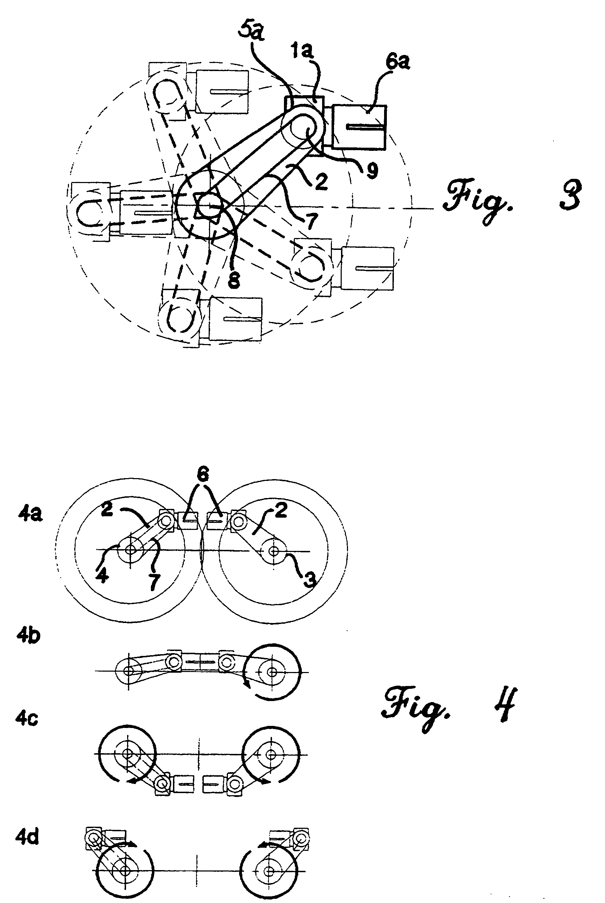

Zur Führung der Werkzeuge 6a, 6b in der aus Fig. 3 ersichtlichen Art, sind zur Beibehaltung der konstant parallelen Raumlage, in den Hebelarmen 2, schematisch eingezeichnete Keilriemen 7 angeordnet, die die starren Lagerwellen 8a und 8b jeweils mit den Lagerwellen 9 der Werkzeugträger 1 in den Hebelköpfen 5 verbinden. Bei einer Umdrehung des Hebelarmes 2 durch die Welle 3, wird der Werkzeugträger 1 und damit auch das Werkzeug 6, während eines Arbeitszyklus, durch eine entsprechende Rückdrehbewegung um die Welle 9, immer in der gleichen parallelen Raumlage gehalten. An Stelle eines Keilriemens, können auch Zahnräder eingesetzt werden.

Durch die einseitige, fliegende Lagerung der Werkzeugträger 1, ergibt sich eine gute Zugängigkeit zu den Werkzeugen 6a. 6b und vor allem auch eine einfache Anschlussverbindung der notwendigen Versorgungsleitungen mit den Werkzeugen 6a, 6b.

Statt drehbarer Verbindungen für Luft, Strom und gegebenenfalls auch anderer Heizmedien, können direkte Leitungsverbindungen eingesetzt werden, die nur in dem durch die Länge der Hebelarme 2 bestimmten Durchmesser der Kreisbahn auf und ab, sowie längs bewegt werden. Diesen Bewegungen kann durch mäanderförmig gelegte Versorgungsleitungen leicht gefolgt werden.

An Hand der Figuren 4a bis 4d wird der Bewegungsablauf der fliegend gelagerten Werkzeugpaare 1a, 1b erläutert. Die Welle 3 wird bei einem Bearbeitungsvorgang im Uhrzeigersinn und die Welle 4 gegenläufig, also im Gegenuhrzeigersinn gedreht. Nach Fig. 4a stehen die Werkzeuge unter Einschluss des hier nicht dargestellten Folienschlauches, kurz vor dem Pressschluss.

Mit der Weiterbewegung, werden die Werkzeuge 6, wie in Fig. 4b gezeigt, gegen die Kraft von nicht gezeichneten, den Werkzeugträgern 1a, 1b zugeordneten Druckfedem gegeneinander gepresst. Die an sich kreisförmige Bewegung der Werkzeuge 6 ist im Bearbeitungsbereich um die Hubhöhe der nicht gezeichneten Federn abgeflacht. Dies ergibt einen parallelen, auf der ganzen Arbeitsfläche der Werkzeuge 6 wirkenden Pressdruck. In der Stellung nach Fig. 4c ist der Pressdruck aufgehoben. Die Hebelarme 2 können nun mit hoher Geschwindigkeit über die Stellung nach Fig. 4d in die Ausgangsstellung nach Fig. 4a bewegt werden, während ein zweites - nicht gezeichnetes - Werkzeugpaar von einem eigenen Antrieb zur Bearbeitung in die Pressstellung mit der Abzugsgeschwindigkeit der Folie bewegt wird.

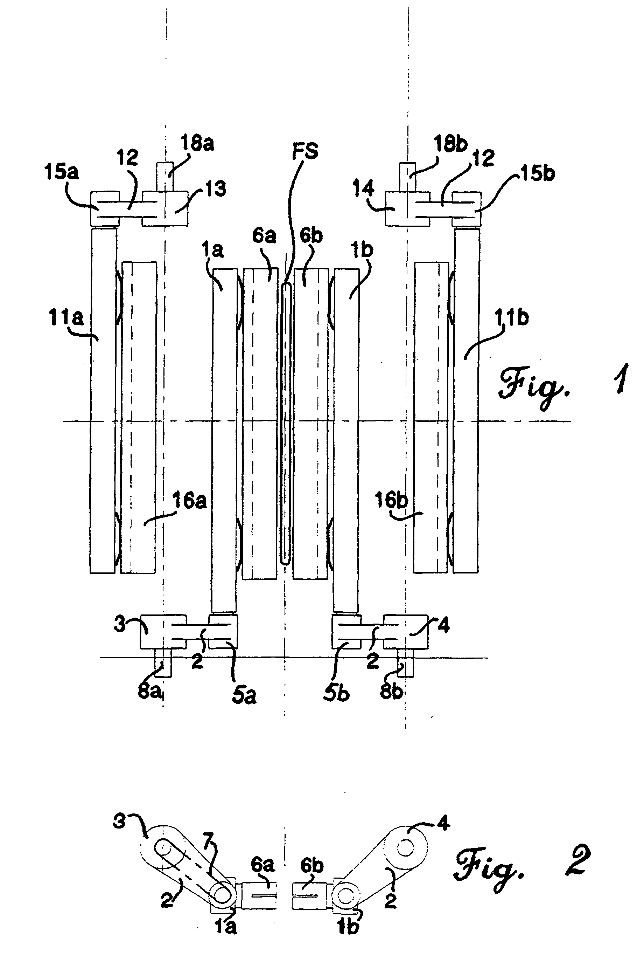

Mit der aus Fig. 1 ersichtlichen Aufbauform mit der fliegenden Lagerung der Werkzeuge, ist auch die Möglichkeit eröffnet, ein zweites anders gestaltetes Werkzeugpaar, dem ersten gegenüber, so anzuordnen, dass die vom Antrieb frei abstehenden, achsparallel gegeneinander gerichteten Werkzeugträger bei der räumlich ineinander greifenden Bewegung, eine andere Funktion, z. B. schneiden, perforieren oder auch aufkleben, auszuüben.

Sollen die Werkzeuge gleich ausgebildet sein und im gleichen Rhythmus auf das durchlaufende Material einwirken, so ist es zweckmässig, eine zweite, gleichartige Einrichtung mit den fliegend gelagerten Werkzeugträgern spiegelverkehrt und gleichachsig anzuordnen. Diese Anordnung ist aus Fig. 1 ersichtlich, wobei die zweite Einrichtung zur Erläuterung mit gleichen Ziffern versehen sind, die um die Zahl 10 erhöht sind.

Im gezeigten Ausführungsbeispiel sind gleiche Werkzeuge 16a und 16b um 180° versetzt auf den Antrieben 13 und 14 angeordnet, so dass während der Zeit die das erste Werkzeug 6a, 6b für das Rücksetzen benötigt, das zweite, gegenüberliegende Werkzeug, 16a, 16b die aktive Arbeitsphase durchlaufen kann. Die Durchsatzgeschwindigkeit kann damit wesentlich erhöht, bis verdoppelt, werden.

Eines der beiden Werkzeugpaare kann auch für andere Aufgaben der Bearbeitung eingesetzt werden. Wegen des Freiraumes, den die fliegende Lagerung schafft, können auch Werkzeuge mit anderem Bearbeitungsrhythmus eingesetzt werden. Über Servomotoren können die Antrieb so gesteuert werden, dass eine Berührung der Werkzeuge, auch wenn sie auf gleichen oder auch kreuzenden Kreisbahnen mit unterschiedlichen Drehzahlen laufen, ausgeschlossen ist.

Wegen der erreichbaren kurzen Rücksetzzeiten ist es möglich, auch Beutel herzustellen, die kürzer sind, als die für die Bearbeitung notwendige Durchsatzstrecke.

Mit den frei von den Antriebshebeln abstehenden Werkzeugen, bzw. Werkzeugträgern, kann auch ein sogenannter "Stripper" verbunden werden, der kurz vor dem Schliessen der Werkzeuge den Folienschlauch mit zwei gegenüberliegenden, leistenartigen Teilen in Bewegungsrichtung abstreift und damit des Schüttgut aus dem Siegelbereich entfernt.

## Patentansprüche

1. Einrichtung zum Bearbeiten von kontinuierlich durchlaufendem Material, insbes. von Folienschläuchen (FS) zum Herstellen von Schlauchbeuteln, unter Verwendung von zwei beiderseits der Folie (FS) angeordneten, von Antrieben bewegten Werkzeugpaaren (6,16), die im geschlossenen Zustand während der Bearbeitungsdauer mit der Folie (FS) synchron bewegt und nach der Bearbeitung im geöffneten Zustand, entsprechend dem Abstand der Bearbeitungsstellen, abwechselnd auf die durchlaufende Folie (FS) zurückgesetzt werden, wobei die Träger (1,11) der Werkzeuge (6,16) beiderseits der Folie (FS) fliegend, das heisst einseitig, so gehaltert sind, dass sie frei abstehend im Bereich der Folie (FS) räumlich ineinander greifen, **dadurch gekennzeichnet, dass**
a) zur Bewegung der Werkzeugpaare (6,16), Hebel (2 bzw. 12) eingesetzt sind, die durch Verbindung des einen Endes mit den Antriebswellen (3 und 13 bzw. 4 und 14) und des anderen Endes mit dem den Trägern (1,11) der Werkzeuge (6,16) eine Art Kurbelwelle bilden, durch die die Träger (1,11) der Werkzeuge (6,16) auf Kreisbahnen um die Achsen (8,18) der Antriebswellen (3 und 13 bzw. 4 und 14) bewegt werden,
b) die Werkzeugträger (1,11) in den den Antriebswellen (3 und 13 bzw. 4 und 14) abgelegenen Köpfen (5,15) der Hebel (2,12) mit Lagerwellen (9) drehbar gelagert sind und dass
c) zwischen den Achsen (8,18) der Antriebswellen (3 und 13 bzw. 4 und 14) und den Lagerwellen (9) für die Werkzeugträger (1,11), Keilriemen (7) angeordnet sind, die die Werkzeugträger (1,11) über eine Rückdrehbewegung, immer in gleichgerichteten, parallelen Raumlagen halten.

2. Einrichtung nach Anspruch 1, **dadurch gekennzeichnet, dass** zumindest einer der Antriebe für die Werkzeugpaare (6a,6b bzw. 16a,16b) derart steuerbar ist, dass der Bewegungsablauf auch innerhalb eines Arbeitszyklus mit unterschiedlicher Drehzahl und unabhängig vom zweiten Antrieb erfolgen kann.

3. Einrichtung nach Anspruch 1 und 2, **dadurch gekennzeichnet, dass** die Antriebe während eines Arbeitszyklus derart steuerbar sind, dass die Bewegung der Werkzeugträger (1,11) beim Zurücksetzen, mit einer gegenüber dem Durchlauf der Folie (FS) erhöhten Geschwindigkeit erfolgt.

4. Einrichtung nach Anspruch 1 bis 3, **dadurch gekennzeichnet, dass** die Achsen (8,18) der Antriebswellen (3 und 13 bzw. 4 und 14) beiderseits der durchlaufenden Folie (FS), koaxial angeordnet sind.

5. Einrichtung nach Anspruch 1 bis 4, **dadurch gekennzeichnet, dass** die Werkzeuge (6,16) auf den Werkzeugträgern (1,11) federelastisch gelagert sind.

6. Einrichtung nach Anspruch 1 bis 5, **dadurch gekennzeichnet, dass** die Werkzeuge (6,16) gegenüber deren Träger (1,11) derart schräg einstellbar sind, dass die Bearbeitungsfläche unter einem von 90 ° zur Durchlaufrichtung abweichenden Winkel verläuft.

## Claims

1. The equipment for processing continuously passing material, namely the tubes of film (FS) for preparation of bags from a tube-sleeve, using two pairs of tools (6,16) arranged on both sides of the plastic film (FS) and moved by drives - these pairs are, in a closed position during the bag processing time, moved simultaneously with the film (FS) and, after the processing time is over in an open position, they are alternatively placed on the on-going film (FS) according to the distances between processing points, while the supports (1,11) of tools (6,16) are overhung on both sides of the film (FS). That means that they are fixed on one side in such a way that they are loosely projected in the film space (FS) matching spatially one another, that is an equipment **characterized by the following facts**
a) levers (2 or 12) are used to move the pairs of tools (6,16); these levers being connected on one side to the driving shafts (3 and 13 or 4 and 14) and on the other side to the supports (1, 11) of tools (6,16) create a sort of a crankshaft by means of which the supports (1,11) of tools (6,16) are moved on circular paths around the axes (8,18) of the driving shafts (3 and 13 or 4 and 14)
b) the tool supports (1,11) are in the heads (5, 15) of levers (2, 12) off the driving shafts pivoted by means of bearing shafts (9) and that,
c) between the axes (8,18) of driving shafts (3 and 13 or 4 and 14) and the bearing shafts (9) for tool supports (1,11), there are V-belts (7) maintaining the tool supports (1, 11) during the return rotative movement always in the parallel spatial position oriented in the same direction.

2. The equipment according to the claim 1 **characterized by the fact that** it is possible to operate at least one of the drives for pairs of tools (6a, 6b or 16a, 16b) in such a way that the movement within one working cycle could run at various rotations and independently on the other drive.

3. The equipment according to the claims 1 and 2 **characterized by the fact that** it is possible to operate the drives during the working cycle in such a way that the movement of tool supports (1, 11) in return movement is performed with higher speed compared to the passing film (FS).

4. The equipment according to the claims 1 to 3 **characterized by the fact** that the axes (8, 18) of driving shafts (3 and 13 or 4 and 14) are arranged co-axially on both sides of the passing film (FS).

5. The equipment according to the claim 1 to 4 **characterized by the fact that** the tools (6,16) are placed in the tool supports (1, 11) on elastic bearings.

6. The equipment according to the claims 1 to 5, **characterized by the fact that,** compared with the supports (1, 11), the tools (6, 16) can be set at an angle in such a way that the processed surface is passing at an deflecting angle of 90° compared to the direction of passing film.

## Revendications

1. L'équipement utilisé pour travailler en continu le matériel traversant, notamment les tuyaux de feuille (FS) pour fabriquer des sachets à partir des manches de tuyau utilisant deux paires d'outils (6,16) arrangés sur les deux côtés de la feuille (FS) et déplacés par des commandes - ces paires sont, en position fermée au cours de fabrication du sachet, déplacés en même temps avec la feuille (FS) et, la fabrication finie, ils sont posés en position ouverte alternativement sur la feuille traversante (FS) selon la distance entre les postes de fabrication, alors que les supports (1,11) d'outils (6, 16) sont ajustés en porte-à-faux sur les deux côtés de la feuille (FS). Cela signifie qu'ils sont fixés sur un côté de façon qu'ils puissent bâiller librement dans l'espace de la feuille (FS) pour s'enclencher spatialement l'un à l'autre, donc un équipement **se caractérisant par le fait que**
a) des leviers (2 ou bien 12) sont utilisés pour faire déplacer les paires d'outils (6,16). Ces leviers, connectés sur un côté aux arbres de commande (3 et 13 ou bien 4 et 14) et sur l'autre côté aux supports (1, 11) d'outils (6,16), forment ainsi une espèce de l'arbre à manivelles qui déplace les supports (1,11) d'outils (6,16) sur des trajectoires circulaires autour des axes (8,18) des arbres de commande (3 et 13 ou bien 4 et 14)
b) les supports d'outils (1,11) sont ajustés en têtes (5, 15) de leviers (2, 12), écartés des arbres de commande, de façon pivotante à l'aide des arbres à paliers (9) et que,
c) entre les axes (8,18) des arbres de commande (3 et 13 ou bien 4 et 14) et les arbres à paliers (9) pour les supports d'outils (1, 11), il y a des courroies tripézoïdales (7) qui, au cours du mouvement rotatif de recul, maintiennent les supports d'outils (1, 11) toujours dans une position spatiale parallèle, orientée dans la même direction.

2. L'équipement selon le droit 1, **se caractérisant par le fait qu**'il est possible de commander au moins une des commandes de paires d'outils (6a, 6b ou bien 16a, 16b) de façon que le mouvement, même dans le cadre d'un cycle de travail, puisse se dérouler à un nombre de rotations varié et indépendemment à la deuxième commande.

3. L'équipement selon les droits 1 et 2, **se caractérisant par le fait que** les commandes peuvent être commandées au cours du cycle de travail de façon que la vitesse de recul des supports d'outils (1, 11) est plus élevée par rapport à la feuille traversante (FS).

4. L'équipement selon les droits 1 à 3, se caractérisant de façon que les axes (8, 18) des arbres de commande (3 et 13 ou bien 4 et 14) sont faites en disposition coaxiale sur les deux côtés de la feuille traversante (FS).

5. L'équipement selon les droits 1 à 4, **se caractérisant par le fait que** les outils (6,16) sont ajustés sur les supports d'outils (1, 11) de façon élastique.

6. L'équipement selon le droit 1 à 5, **se caractérisant par le fait qu**'il est possible de positionner les outils (6, 16) obliquement par rapport aux supports (1, 11) de façon que la surface travaillée passe sous l'angle déviant de 90 ° par rapport au sens de la traversée.
